# EUROPÄISCHE PATENTSCHRIFT

(11) **EP 2 402 631 B1**
(45) Veröffentlichungstag und Bekanntmachung des Hinweises auf die Patenterteilung: **15.01.2014**
(21) Anmeldenummer: 10006704.0
(22) Anmeldetag: 29.06.2010
(51) Int. Cl.: F16H 55/08, F03D 11/02

(54) **Planetengetriebe für eine Hauptlastrichtung**
Planetary gear for a main loading direction
Train épicycloïdal pour une direction de charge principale

(43) Veröffentlichungstag der Anmeldung: 04.01.2012
(73) Patentinhaber: Siemens Aktiengesellschaft, 80333 München (DE)
(72) Erfinder: Dinter, Ralf Martin, Dr., 45888 Gelsenkirchen (DE); Hess, Ralf, Dr., 46395 Bocholt (DE)

(56) Entgegenhaltungen:
- WO-A2-2006/070245
- DE-A1- 4 410 042
- FR-A1- 2 226 594
- GB-A- 2 004 973
- JP-A- 4 022 799
- JP-A- 55 090 752
- JP-A- 2005 023 978
- US-A- 2 403 492
- US-A1- 2007 042 860
- DATABASE WPI Week 200624 Thomson Scientific, London, GB; AN 2006-228130 XP002607883, -& RU 2 272 195 C1 (AVIATION ENGINES CONSTR INST BARANOV) 20. März 2006 (2006-03-20)
- DATABASE WPI Week 198433 Thomson Scientific, London, GB; AN 1984-205930 XP002607884, & SU 1 060 839 A (VULGAKOV E B) 15. Dezember 1983 (1983-12-15)
- DATABASE WPI Week 198547 Thomson Scientific, London, GB; AN 1985-295057 XP002607885, & SU 1 155 806 A (BULGAKOV E B) 15. Mai 1985 (1985-05-15)

## Beschreibung

Planetengetriebe bieten gegenüber herkömmlichen Stirnrad- und Kegelstirnradgetrieben hinsichtlich Leistungsdichte und spezifischem Drehmoment deutliche Vorteile und umfassen ein Sonnenrad, einen Planetenradträger mit Planetenrädern sowie ein innenverzahntes Hohlrad. Insbesondere bei Windkraftanlagen ist eine hohe Leistungsdichte von entscheidender Bedeutung. Maßgeblich für die Leistungsdichte von Getrieben sind Tragfähigkeitseigenschaften ihrer Verzahnungen. Die Tragfähigkeit von Verzahnungen wird im einzelnen u.a. durch Zahnflankentragfähigkeit, Fußtragfähigkeit, Freßtragfähigkeit, Graufleckentragfähigkeit und Verschleißtragfähigkeit begrenzt. Tragfähigkeitsberechnungen erfolgen nach genormten Berechnungsverfahren, beispielsweise nach ISO 6336. Um die Tragfähigkeit von Verzahnungen zu erhöhen, werden diese üblicherweise gehärtet. Ein solches Härten erfolgt bei geschlossenen Getrieben häufig mittels Gasnitrieren oder durch eine Einsatzhärtung.

Die RU 2 272 195 C1 wird als nächst liegender Stand der Technik angesehen.

In EP 1 350 601 A1 ist ein Verfahren zur Behandlung von Verzahnungen beschrieben, bei dem geschaffene oder fertiggestoßene Zahnflanken einer Verzahnung, insbesondere einer Innenverzahnung eines Hohlrads, in einer Stickstoff abgebenden Gasatmosphäre gasnitriert werden. Nach einem Gasnitrieren wird ein entstandener Porensaum durch chemisch beschleunigtes Gleitschleifen von Zahnflankenoberflächen entfernt. Hierdurch werden die Zahnflankenoberfläche sehr glatt geschliffen. Das Gleitschleifen erfolgt mittels eines in Vibration versetzten Vibrationsaggregats und einer wäßrigen, säurehaltigen Spezialflüssigkeit. Die Spezialflüssigkeit umfaßt eine Mischung von Feststoffen. Zu den Feststoffen zählen u.a. leicht abrasiv wirkende, keramische Stoffe.

Aus EP 1 832 370 A1 ist ein Verfahren zur Fertigung von evolventenförmigen Verzahnungen von Stirnrädern aus Einsatzstahl, Vergütungsstahl oder Nitrierstahl bekannt, bei dem die Stirnräder einem chemisch beschleunigten Gleitschleifen mit einer chemischen Spezialflüssigkeit und nicht abrasiven Schleifkörpern unterworfen werden. Bei Getrieben für Windkraftanlagen werden die Stirnräder wälzgefräst, wärmebehandelt und mit einer durch Schleifen eingebrachten Profilmodifikation ausgestattet, die von einer Evolventenform abweicht und als Kopf-, Fuß- und Flankenlinienrücknahme ausgebildet ist. Beim Gleitschleifen wird eine Gratbildung an Flankenkanten, welche die Profilmodifikation begrenzen, durch eine aufeinanderfolgende Bearbeitung mittels der nicht abrasiven Schleifkörper an den Graten und durch nachträgliche Bearbeitung mit der chemischen Spezialflüssigkeit an den Gratresten abgetragen. Dabei werden die Flankenkanten zwischen unterschiedlich gewölbten Teilflächen asymptotisch nivelliert.

In JP 2006/090466 A1 ist ein Zahnradpaar mit Evolventenverzahnung und asymmetrisch ausgestalteten Zahnflanken beschrieben. Die asymmetrische Ausgestaltung der Zahnflanken zielt dabei auf einen verbesserten Flächenkontakt zwischen miteinander im Eingriff stehender Zähne ab.

Der vorliegenden Erfindung liegt die Aufgabe zugrunde, ein Planetengetriebe für eine Windkraftanlage zu schaffen, das eine verbesserte Leistungsdichte aufweist.

Diese Aufgabe wird erfindungsgemäß durch ein Planetengetriebe mit den in Anspruch 1 angegebenen Merkmalen gelöst. Vorteilhafte Weiterbildungen der vorliegenden Erfindung sind in den abhängigen Ansprüchen angegeben.

Das erfindungsgemäße Planetengetriebe umfaßt ein Getriebegehäuse, ein Sonnenrad, ein Hohlrad und mehrere in einem Planetenträger gelagerte Planetenräder, die mit dem Sonnenrad und dem Hohlrad in Eingriff stehen. An Sonnenrad und Planetenrädern ist eine Verzahnung vorgesehen, deren jeweiliges Profil auf einer ersten Seite und einer zweiten Seite der Verzahnung asymmetrisch ausgebildet ist. Dabei sind am Zahneingriff zwischen Sonnenrad und Planetenrädern Krümmungsradius, Eingriffswinkel, Fußradius und/oder Zahnfußsehne jeweils asymmetrisch ausgestaltet. Am Zahneingriff zwischen Planetenrädern und Hohlrad sind Krümmungsradius, Eingriffswinkel, Fußradius und/oder Zahnfußsehne der Planetenräder asymmetrisch ausgestaltet. Durch eine gezielt asymmetrische Ausgestaltung der Verzahnung ergibt sich eine erhöhte Tragfähigkeit, die eine Verbesserung der Leistungsdichte ermöglicht.

Die vorliegende Erfindung wird nachfolgend an einem Ausführungsbeispiel anhand der Zeichnung näher erläutert. Es zeigt
- Figur 1: eine schematische Darstellung eines Planetengetriebes
- Figur 2: eine Darstellung von Geometriedaten einer Verzahnung,
- Figur 3: eine schematische Darstellung von asymmetrisch ausgeführten Verzahnungen eines Planetengetriebes.

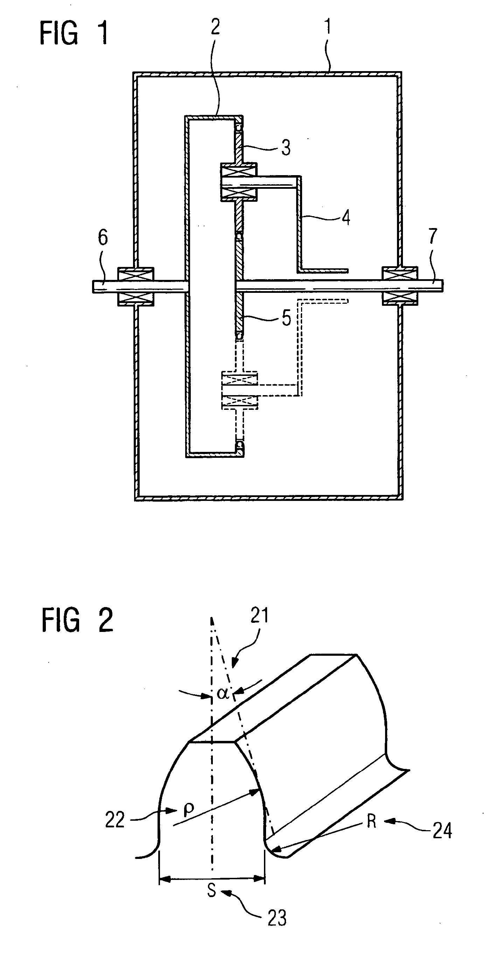

Das in Figur 1 schematisch dargestellte Planetengetriebe für eine Windkraftanlage umfaßt ein Getriebegehäuse 1, ein Sonnenrad 5, ein Hohlrad 2 und mehrere in einem Planetenträger 4 gelagerte Planetenräder 3, die mit dem Sonnenrad 5 und dem Hohlrad 2 in Eingriff stehen. Im vorliegenden Beispiel ist das Hohlrad 2 mit einer Antriebswelle 6 drehstarr verbunden, während das Sonnenrad 5 mit einer Abtriebswelle 7 verbunden ist. Grundsätzlich könnte die Antriebswelle 6 auch mit dem Planetenträger 4 oder mit dem Sonnenrad 5 verbunden sein. Bei einem feststehenden Hohlrad 2 kann dies einen Teil des Getriebegehäuses 1 bilden. Dementsprechend kann die Antriebswelle 6 dann in einem antriebsseitigen Gehäuseteil gelagert sein, während die Abtriebswelle 7 in einem abtriebsseitigen Gehäuseteil gelagert ist. Auf diese Weise läßt sich ein Planetengetriebe zu Wartungszwecken leicht demontieren. Außerdem ermöglicht eine derartige Aufteilung eine rationelle Werkstoffverwendung.

In Figur 2 sind Geometriedaten einer Verzahnung eines Planetengetriebes dargestellt, die als Einflußgrößen für eine Flankentragfähigkeit wesentlich sind. Hierzu zählen Krümmungsradius 22 (ρ) und Betriebseingriffswinkel 21 (α), der indirekt den Krümmungsradius verändert. Relevante Einflußgrößen für eine Fußtragfähigkeit Fußradius 24 (R) und Zahnfußsehnenlänge 23 (S).

Durch eine Veränderung der geometrischen Einflußgrößen
- Krümmungsradius
- Betriebseingriffswinkel
- Fußradius
- Zahnfußsehne

kann eine Tragfähigkeitsoptimierung unter Berücksichtigung von Obergrenzen für Zahnflankentragfähigkeit, Fußtragfähigkeit, Freßtragfähigkeit, Graufleckentragfähigkeit, Tragfähigkeit gegen Subsurface Fatigue und Verschleißtragfähigkeit für eine Seite einer Verzahnung erfolgen. Dabei kann die
Tragfähigkeit einer gegenüberliegenden Seite der Verzahnung absinken.

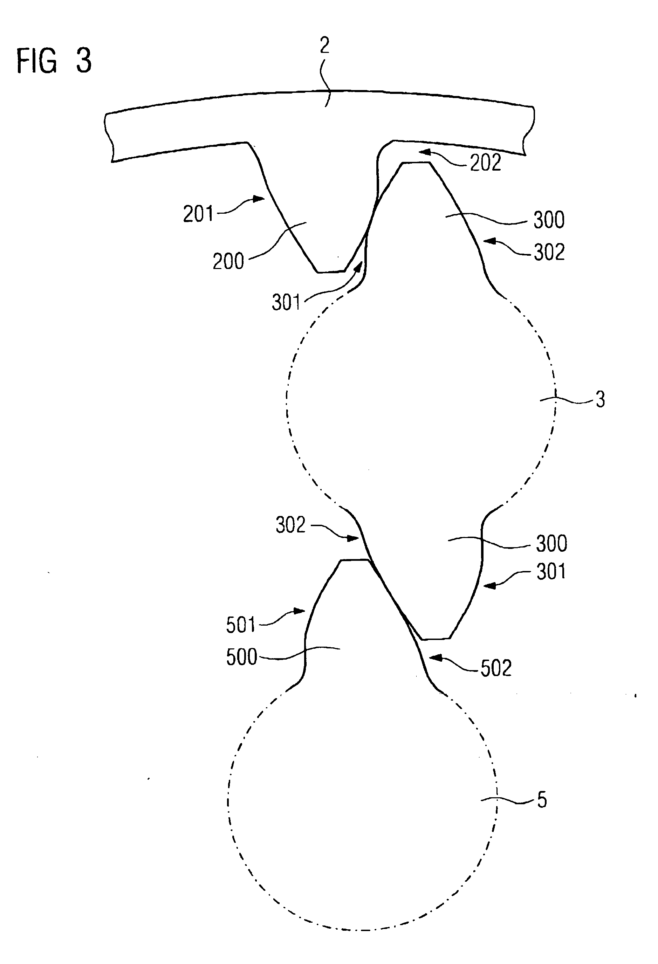

Erfindungsgemäß resultiert dies in einer Verzahnung 300, 500 an Sonnenrad 5 und Planetenrädern 3, deren jeweiliges Profil entsprechend Figur 3 auf einer ersten Seite 301, 501 und einer zweiten Seite 302, 502 der Verzahnung 300, 500 asymmetrisch ausgebildet ist. Am Zahneingriff zwischen Sonnenrad 5 und Planetenrädern 3 sind Krümmungsradius, Eingriffswinkel, Fußradius bzw. Zahnfußsehne jeweils asymmetrisch ausgestaltet. Auch am Zahneingriff zwischen Planetenrädern 3 und Hohlrad 2 sind Krümmungsradius, Eingriffswinkel, Fußradius bzw. Zahnfußsehne der Planetenräder asymmetrisch ausgestaltet. Die Verzahnung 200 des Hohlrads 2 weist ein Profil auf, das auf einer ersten Seite 201 und einer zweiten Seite 202 der Verzahnung 200 asymmetrisch ausgebildet ist.

Durch die asymmetrische Ausgestaltung des Profils der Verzahnung 300, 500 an Sonnenrad 5 und Planetenrädern 3 ist deren Tragfähigkeit auf der zweiten Seite 302, 502 gegenüber der ersten Seite 301, 502 erhöht. Damit wird die Tragfähigkeit einer Verzahnung für eine Lastrichtung erhöht. Dies kann gezielt eingesetzt werden, wenn das Planetengetriebe nur eine Hauptlastrichtung hat. Die Tragfähigkeit der ersten und zweiten Zahnseite kann auf unterschiedliche Belastungen in beiden Drehrichtungen optimiert werden. Dadurch kann die Belastungsdichte der Verzahnung mit einer asymmetrischen Verzahnung gegenüber einer symmetrischen Verzahnung erhöht werden, wenn unterschiedliche Belastungen für beide Drehrichtungen vorliegen. Planetengetriebe für Windkraftanlagen können mit nur einer Hauptlastrichtung betrieben werden.

Entsprechend Figur 3 weisen die Planetenräder 3 darüber hinaus jeweils einen doppelten Zahneingriff mit einem Eingriff zum Hohlrad 2 einerseits und andererseits mit einem Eingriff auf einer gegenüberliegenden Seite zum Sonnenrad 5 auf.

Eine Erhöhung der Tragfähigkeit der Verzahnung eines Planetengetriebes mit einem Doppeleingriff der Planetenräder 3 erfolgt am Zahneingriff zwischen Sonnenrad 5 und Planetenrädern 3 durch
- eine asymmetrische Verzahnung für Sonnenrad 5 und Planetenräder 3,
- eine Optimierung der Tragfähigkeit zwischen Sonnenrad 5 und Planetenrädern 3 durch Änderung von
   ○ Krümmungsradius,
   ○ Betriebseingriffswinkel,
   ○ Fußradius,
   o Zahnfußsehne.

Am Zahneingriff zwischen Planetenrädern 3 und Hohlrad 2 erfolgt eine Erhöhung der Tragfähigkeit durch
- eine asymmetrische Verzahnung für Planetenräder 3 und Hohlrad 2,
- eine Optimierung der Tragfähigkeit zwischen Planetenrädern 3 und Hohlrad 2 im Verhältnis zur Tragfähigkeit zwischen der Tragfähigkeit zwischen dem Sonnenrad 5 und den Planetenrädern 3 durch Änderung von
   ○ Krümmungsradius,
   ○ Betriebseingriffswinkel,
   ○ Fußradius,
   ○ Zahnfußsehne,
   ○ Hohlradwerkstoff.

Eine derartige Tragfähigkeitsoptimierung der Verzahnungen an Sonnenrad 5 und Planetenrädern 3 führt zunächst zu einer Reduktion der Tragfähigkeit am Zahneingriff zwischen Planetenrädern 3 und Hohlrad 2. Diese Reduktion kann jedoch kompensiert werden, da ein konkav-konvexer Zahneingriff zwischen innenverzahntem Hohlrad 2 und außenverzahnten Planetenrädern 3 im Vergleich zu einem konvex-konvexem Zahneingriff zwischen Planetenrädern 3 und Sonnenrad 5 grundsätzliche höhere Tragfähigkeiten ermöglicht. Durch eine gezielte Verzahnungsgeometrieoptimierung mit einer asymmetrisch profilierten Verzahnung läßt sich die Tragfähigkeit am Zahneingriff zwischen Sonnenrad 5 und Planetenrädern 3 und am Zahneingriff zwischen Planetenrädern 3 und Hohlrad 2 geometrisch optimieren. Auch durch eine Verwendung geeigneter Werkstoffe und Härtverfahren für das Hohlrad 2 lassen sich eine höhere Tragfähigkeit und damit eine erhöhte Leistungsdichte gegenüber einer symmetrischen Verzahnungsgeometrie für eine Hauptlastrichtung erzielen.

Die vorliegende Erfindung ist nicht auf das beschriebene Ausführungsbeispiel beschränkt.

## Patentansprüche

1. Planetengetriebe für eine Windkraftanlage mit
- einem Getriebegehäuse (1), einem Sonnenrad (5), einem Hohlrad (2) und mehreren in einem Planetenträger (4) gelagerten Planetenräder (3), die mit dem Sonnenrad (5) und dem Hohlrad (2) in Eingriff stehen,
- einer Verzahnung an Sonnenrad und Planetenrädern, deren jeweiliges Profil auf einer ersten Seite und einer zweiten Seite der Verzahnung asymmetrisch ausgebildet ist, **dadurch gekennzeichnet**
- **dass** am Zahneingriff zwischen Sonnenrad und Planetenrädern Krümmungsradius (ρ), Eingriffswinkel (α), Fußradius (R) und Zahnfußsehne (23) jeweils asymmetrisch ausgestaltet sind,
- **dass** am Zahneingriff zwischen Planetenrädern und Hohlrad Krümmungsradius (ρ), Eingriffswinkel (α), Fußradius (R) und Zahnfußsehne (23) der Planetenräder asymmetrisch ausgestaltet sind.

2. Planetengetriebe nach Anspruch 1,
bei dem die Planetenräder (3) jeweils einen doppelten Zahneingriff mit einem Eingriff zum Hohlrad (2) und mit einem Eingriff auf einer gegenüberliegenden Seite zum Sonnenrad (5) aufweisen.

3. Planetengetriebe nach einem der Ansprüche 1 oder 2,
bei dem das Planetengetriebe nur eine Hauptlastrichtung aufweist.

4. Planetengetriebe nach einem der Ansprüche 1 bis 3,
bei dem das Hohlrad (2) einen Teil des Getriebegehäuses (1) bildet.

5. Planetengetriebe nach Anspruch 4,
bei dem eine Antriebswelle (6) in einem antriebsseitigen Gehäuseteil gelagert ist, und dem eine Abtriebswelle (7) in einem abtriebsseitigen Gehäuseteil gelagert ist.

## Claims

1. Planetary gearing for a wind turbine having
- a gearbox (1), a sun wheel (5), a hollow wheel (2) and a plurality of planetary wheels (3) mounted in a planetary carrier (4), said planetary wheels (3) meshing with the sun wheel (5) and the hollow wheel (2),
- gear teeth on the sun wheel and planetary wheels, whose respective profiles are designed to be asymmetrical on a first side and a second side of the gear teeth, **characterised in that**
- bending radius (ρ), pressure angle (α), root radius (R) and tooth root chord (23) are each designed to be asymmetrical at the meshing between sun wheel and planetary wheels,
- bending radius (ρ), pressure angle (α), root radius (R) and tooth root chord (23) of the planetary wheels are designed to be asymmetrical at the meshing between planetary wheels and hollow wheel.

2. Planetary gearing according to claim 1,
wherein the planetary wheels (3) each have a dual meshing, with one mesh with the hollow wheel (2) and one mesh on an opposite side with the sun wheel (5).

3. Planetary gearing according to one of claims 1 or 2, wherein the planetary gearing has only one main load direction.

4. Planetary gearing according to one of claims 1 to 3, wherein the hollow wheel (2) forms a part of the gearbox (1).

5. Planetary gearing according to claim 4,
wherein a drive shaft (6) is mounted in a drive-side housing part and an output shaft (7) is mounted in an output-side housing part.

## Revendications

1. Train épicycloïdal pour une centrale éolienne comprenant
- un carter ( 1 ) d'engrenage, une roue ( 5 ) solaire, une roue ( 2 ) à denture intérieure et plusieurs roues ( 3 ) planétaires montées dans une cage ( 4 ) de transmission planétaire, roues satellites qui sont en prise avec la roue ( 5 ) solaire et avec la roue ( 2 ) à denture intérieure,
- une denture sur la roue solaire et les roues satellites, dont le profil respectif est dissymétrique d'un premier côté et d'un deuxième côté de la denture, **caractérisé**
- **en ce que**, à l'engrènement entre la roue solaire et les roues satellites, le rayon ( ρ ) de courbure, l'angle ( α ) de pression, le rayon ( R ) de pied et la corde ( 23 ) au pied de dent des roues satellites sont dissymétriques,
- **en ce que**, à l'engrènement entre les roues satellites et la roue à denture intérieure, le rayon ( ρ ) de courbure, l'angle ( α ) de pression, le rayon ( R ) de pied et la corde ( 23 ) au pied de dent des roues satellites sont dissymétriques.

2. Train épicycloïdal suivant la revendication 1,
dans lequel les roues ( 3 ) satellites ont respectivement un engrènement double en ayant un engrènement avec la roue ( 2 ) à denture intérieure et un engrènement du côté opposé avec la roue ( 5 ) solaire.

3. Train épicycloïdal suivant l'une des revendications 1 ou 2,
dans lequel le train épicycloïdal n'a qu'une direction principale de charge.

4. Train épicycloïdal suivant l'une des revendications 1 à 3, dans lequel la roue ( 2 ) à denture intérieure forme une partie du carter ( 1 ) de l'engrenage.

5. Train épicycloïdal suivant la revendication 4,
dans lequel un arbre ( 6 ) menant est monté dans une partie du carter du côté menant et dans lequel un arbre ( 7 ) mené est monté dans une partie du carter du côté mené.
